Europäisches Patentamt

European Patent Office

Office européen des brevets

(19)

(11) Publication number: **0 156 505**

**A1**

(12)

# EUROPEAN PATENT APPLICATION

(21) Application number: **85301174.0**

(22) Date of filing: **22.02.85**

(51) Int. Cl.⁴: **G 07 F 7/06**
**H 01 M 10/42**

(30) Priority: **22.02.84 GB 8404689**

(43) Date of publication of application:
**02.10.85 Bulletin 85/40**

(84) Designated Contracting States:
**IT**

(71) Applicant: **Peakmicro Limited**
**7 Great James Street**
**London, W1N 3DA(GB)**

(72) Inventor: **Moore, John Leonard**
**Normandie 35 Firgrove Hill**
**Farnham Surrey, GU9 8LN(GB)**

(74) Representative: **James, Michael John Gwynne et al,**
**Wynne-Jones, Lainé & James 22, Rodney Road**
**Cheltenham Gloucestershire GL50 1JJ(GB)**

(54) **Improvements relating to vending machines.**

(57) Used batteries are placed in an inlet pocket 4 and are then carried around within pockets in a rotating drum 5 past a sensing head 7, an acceptance port 8 and a discard outlet 10. If the sensing head 7 registers the presence of an acceptable battery a flap is opened to allow the battery to fall into the acceptance port 8. Otherwise it is carried round and rejected through the discard outlet 10. Furthermore batteries will only be accepted if coins or tokens of a required value have been put into a coin receipt unit 3. A control unit 17 receives information from the sensing head 7 and unit 3 to control access to the acceptance port 8. Acceptable used batteries then fall into a storage unit 9 and ultimately pass through a charging unit 39 where the batteries are subjected to a recharging process. Recharged batteries are stored in a storage region 25 and are dispensed through an outlet chute 26 to an outlet hopper 27 when the control unit 17 registers receipt of a used battery and the correct payment through the coin receipt unit 3.

Fig.1.

Croydon Printing Company Ltd.

EP 0 156 505 A1

## "Improvements relating to vending machines"

This invention is concerned with the sale of dry cell batteries used for a variety of domestic and other purposes. Most batteries of this type are used until their power falls below a useful level whereupon the battery is thrown away. It is possible to obtain rechargeable batteries but for most domestic users the cost of a recharging unit is high, and would normally only be considered by a person using large quantities of dry cell batteries.

It is an object of this invention to provide means whereby batteries may readily be recharged at low cost, thus enabling rechargeable batteries to become more acceptable.

According to the present invention there is provided, from one aspect a battery vending machine having an input for receipt of a used battery and including a battery identification unit to check for acceptable batteries when inserted, a charging unit for recharging the battery to a predetermined high charge level, and a battery dispensing unit for dispensing another charged battery from the machine upon receipt of an acceptable used battery and upon receipt of an activating signal from a control unit, the charging unit output being connected to deliver recharged batteries to the input of the battery dispensing unit.

The provision of such a vending machine means that a large number of people can have access to the same machine for charging their own batteries and thus do not have to invest in the high cost of having their own individual charging unit. The control unit can be designed to produce the activating signal upon receipt of a coded input signal or the insertion of suitable coins, cards or tokens. If it is coin operated then the user will in effect be recharging his battery for a small fee which will certainly be much less than the cost of purchasing a new battery. In certain instances it may be desirable to provide a battery recharging device for use, for example, by a number of employees of a company who use a large number of batteries. In this case payment for recharging may not be necessary so that the dispensing of recharged batteries to replace used batteries can be initiated by keying in a coded input signal or inserting a suitable token.

It is preferred that the identification unit should be effective to check the size or type of battery or for possible physical damage to the battery and to reject any non-standard battery. The machine will therefore only accept batteries of the type which it is capable of recharging and which are in an acceptable physical shape. The identification unit could also be effective to check the age or number of previous recharging operations applied to the battery and to accept any battery falling within predetermined limits for transmission to the charging unit whilst any batteries falling outside the limits would be transferred to a reject store. This would ensure that a battery which is approaching the end of its useful life is not passed through the machine and dispensed at a later time. New batteries sold could for example carry coded information which will be modified at suitable intervals, so that the machine would know the approximate age of a battery from its code.

The charging unit will ideally incorporate a discharging section for discharging an accepted battery to a predetermined low charge level before recharging commences. Charging could be achieved by causing cyclic recharging of the battery with a short discharge period during which the state of the battery is checked, until a required charging level is reached. The state of charge of a battery can be checked during discharging of a battery and this arrangement ensures that a proper reading is obtained. It is envisaged however that each battery will be subjected to a continuous charge over a predetermined period of time suitable for that battery.

The machine will advantageously incorporate a storage compartment for holding batteries between transfer from the charging unit to the dispensing unit. The dispensing unit itself will preferably be effective to dispense a battery of the type as determined by the identification unit or by an input to the control unit, so that the machine is capable of accepting and dispensing batteries of various types.

The machine will ideally include a display unit for indicating acceptance of a  battery and requirements for activation of the control unit. The display unit could be designed to indicate also the reason for rejection of any unacceptable batteries.

In the preferred arrangement the machine will be constructed to cause batteries to pass therethrough by gravity feed. Ideally the charging unit will be incorporated as part of a vertically disposed rack through which the batteries will pass, flanges projecting alternately from the inner faces of the side walls of the rack defining a serpentine path for the batteries.

Releasable gates can be provided within the rack to hold batteries at desired locations within the rack for required periods of time. Preferably there will be an array of identical racks positioned side by side and means for feeding batteries to the racks in sequence so as to ensure an even supply to the racks. In this case the means for supplying batteries to the racks

0156505

can comprise a sloping supply channel incorporating gates which will be raised by control means as required to allow batteries to fall into the racks in sequence. The floor of the sloping supply channel will ideally be of undulating form in the direction of travel so as to control the alignment of the batteries as they pass down the supply channel. If the side walls of the supply channel have portions angled away from near the base of the supply channel, this will reduce the possibility of projecting battery terminals causing misalignment of the battery.

The input for receipt of a used battery preferably comprises a pocket with a closable door. The machine may include a rotary member with pockets for receipt of batteries for transferring the batteries from the input, past the identification unit and to an inlet to the charging unit or to a discard outlet.

MJ/MIO

The invention may be performed in various ways and a preferred embodiment thereof will now be described with reference to the accompanying drawings, in which:-

Figure 1 is a diagrammatic illustration of various internal features of a battery vending machine of this invention;

Figure 2 is a detailed side view of a battery receipt unit of the machine;

Figure 3 is a detailed side view of a battery storage and charging unit of the machine;

Figure 4 is an illustration of a battery track constituting part of an inlet to the storage unit of Figure 3; and

Figure 5 illustrates a detail of the battery storage unit of Figure 3.

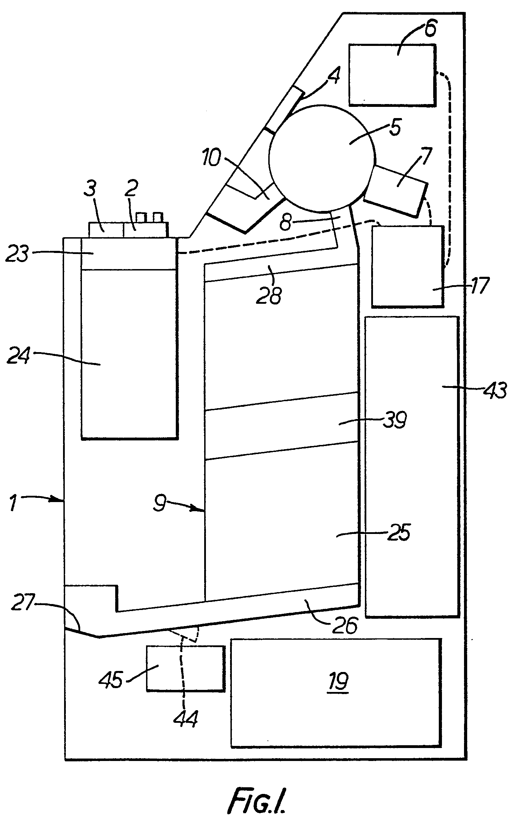

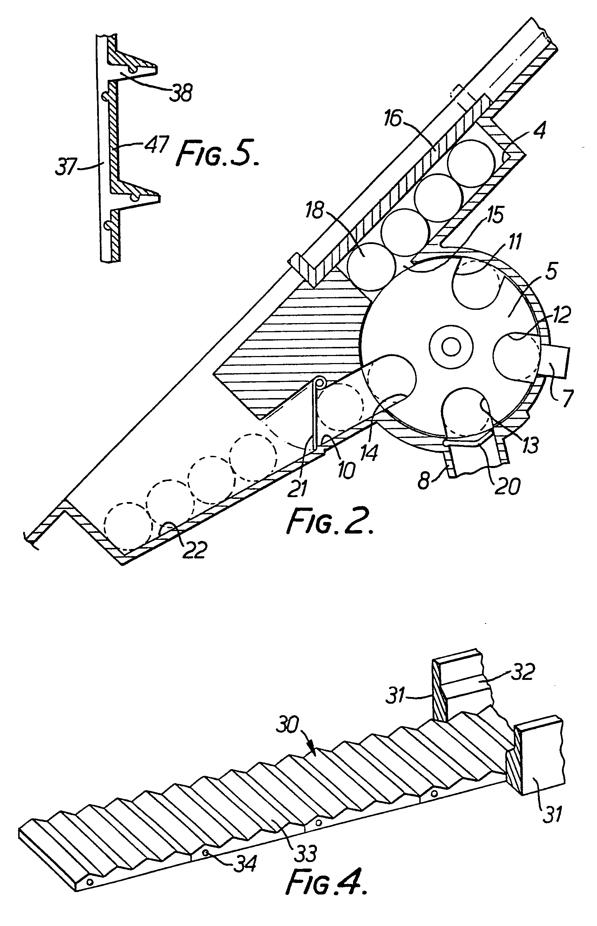

The battery vending machine of Figure 1 is incorporated in a cabinet 1 provided with a control and display panel 2 and a coin receipt unit 3. Used batteries are placed in a pocket 4. A drum 5 is then rotated under control of a unit 6 driving a stepper motor for the drum 5 so that batteries in the pocket 4 are sequentially received in pockets in the drum 5 and are carried around firstly past a sensing head 7 then to an acceptance port 8 to a storage unit 9 for acceptable batteries or to a discard outlet 10 for unacceptable batteries. This part of the apparatus can be seen in more detail in Figure 2, where the drum 5 is shown as having four pockets 11, 12, 13, 14 spaced, in a clockwise direction, at angles of 72° subtended from the axis of the drum 5. However, the angular displacement between the pockets 14 and 11 is 144°. The drum 5 is shown in Figure 2 in its initial position where a continuous surface of the drum 5 is positioned against an entry opening 15 to the inlet pocket 4. Up to four batteries can be placed in the entry pocket 4 and upon closure of a cover 16 the unit 6 is enabled by a signal from a control unit 17 (Figure 1) to cause the drum 5 to be stepped round by increments of 72°. The pocket 14 will then be aligned with the entry opening 15 and will rest there a while to allow a battery 18 to enter the pocket 14. Further batteries situated within the entry pocket 4 can be received by the drum pockets 13, 12 and 11 as the drum is stepped around. As each drum pocket passes the sensing head 7 the battery will be scanned to check for acceptability. In this instance acceptable batteries 18 will carry a band of material which is sensitive to infra-red radiation, the band being carried at a predetermined end of the battery on its curved surface. If the sensing head 7 recognises the band in the correct position then the control unit 17 will cause a pivoted flap 20 to open downwardly into the acceptance port 8 on the next stepped rotation thus enabling the battery 18 to fall into the port 8 upon the

MJ/MIO                    -7-

next incremental rotation of the drum 5. If a suitable signal is not received by the control unit 17 from the sensing head 7 the flap 20 will not be opened and so the battery will ultimately be moved past the acceptance port 8 until it reaches the discard outlet 10. The weight of the battery will be sufficient to move a flap 21 into an open position against a light spring bias so that the battery falls into a reject bin 22. Once the drum 5 has started to rotate the cover 16 will be locked in a closed position until the drum has completed a full sequence back to the start position illustrated in Figure 2. The cover 16 can then be opened again to insert more batteries or to reinsert batteries which have dropped into the reject bin 22 if the sole reason for rejection was that the battery was incorrectly orientated. Batteries passing through the machine must be positioned with their positive and negative poles in a predetermined orientation.

The control unit 17 also receives signals from circuitry 23 (Figure 1) associated with the control panel 2 and the coin receiving mechanism 3 (accepted coins fall into a collection hopper 24). When the control unit 17 registers the fact that one or more acceptable batteries have been received and have passed through the acceptance port 8 and that sufficient coins for a transaction have previously been received by the receiving mechanism 3, an equivalent quantity of batteries within a storage part 25 will be released into an outlet chute 26 to be dispensed to an outlet hopper 27 in a manner to be described in greater detail hereinafter. The control panel and display unit 2 can display information relating to a transaction, such as the amount of money inserted, the number of batteries accepted and, possibly, reasons for rejection of unacceptable batteries. The equipment will be designed to return any unused coins, such as for rejected batteries.

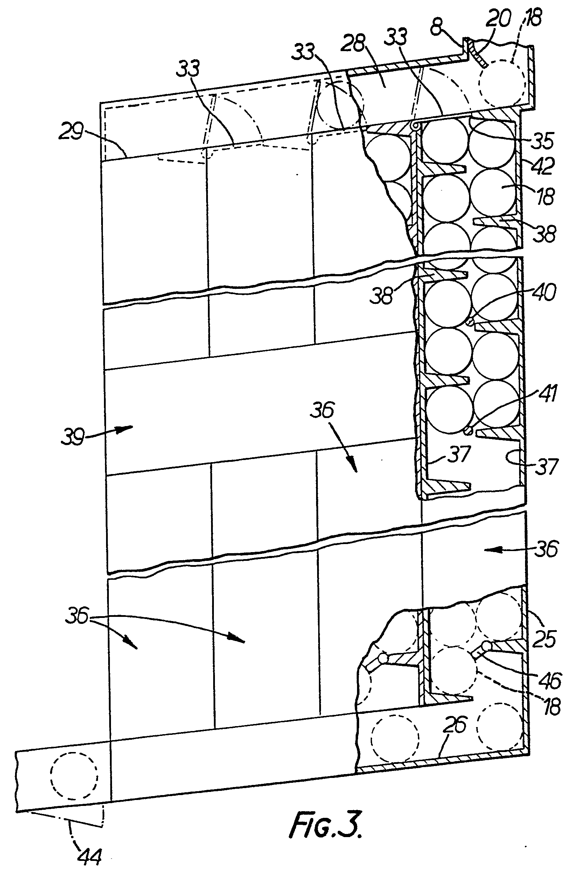

Turning now to Figure 3 of the drawings, this shows a unit which stores batteries received through the acceptance port 8. These batteries are fed into a supply channel 28 having a sloping floor 29 of the form as illustrated in Figure 4. This comprises a stepped, but downardly angled, track 30. The side walls 31 of the supply channel 28 incorporate angled portions 32. As a battery rolls down the track 30 its momentum is controlled as it runs up and down the steps of the track and the battery tends to be repositioned into each valley of the track 30 so as to adjust for any tendency of the battery to twist out of line. The angled steps 30 on the side walls 31 also tend to reposition the battery centrally between the walls 31 should the battery start to ride up one of the walls. It will be appreciated that if the battery was able to turn so that the axis of the battery was pointing down the sloping floor 29 it could come to a halt and/or jam other parts of the mechanism.

The track 30 is divided into separate sections each of which can act as a flap 33 by pivoting about a pivot point 34. When a flap 33 is raised (by operation of a solenoid controlled by the control circuit 17) it will open an entry port 35 to a respective one of a series of four stacks 36. The flaps 33 will be opened in sequence so that the four stacks are filled sequentially over a period of time as batteries are fed in through the acceptance port 8.

Each stack 36 has a pair of opposed walls 37 from which project, in a staggered configuration, abutments 38. These project by an amount substantially equal to the diameter of one battery and the distance between a free end of each abutment and the opposed wall is slightly greater than one battery diameter. The distance between one abutment and that above or below it is slightly more than two battery diameters. Thus an article following a serpentine path under gravity through a stack only falls through about two battery diameters, at most.

In an intermediate region of the apparatus there is provided a charging region shown generally as 39 in which a batch of four batteries in each stack are charged by passing a current to electrodes which contact the two ends of each of the four batteries of each batch. Entry to the charging region is governed by a plunger 40 which, when extended, prevents a battery from dropping through into the charging region. A similar plunger 41 governs the release of batteries from the charging region. Photocells (not shown) detect the passage of batteries into the charging regions and the control means will allow the electrodes to advance onto the batteries only when all four spaces are filled. After a desired time the electrodes are withdrawn and the batteries are allowed to pass into the storage region 25. A new batch of batteries is then allowed into each charging region from the inlet regions 42 by operation of the plunger 40.

The charging region 39 is supplied from charging circuits 43 (Figure 1). The charging circuitry supplies constant current to each of the batteries in the charging region. The charging circuitry 43 will also control movement of side plates of the charging region 39 to cause the electrodes to press against the positive and negative terminals of the batteries. A further feature of the charging circuit 43 is that it will check whether a battery is charged fully over the charging cycle (which may be from fifty minutes to five hours, depending on the size of the battery being charged) and will pass a signal to the control

0156505

circuit 17 for any battery which does not charge properly. The control circuit 17 will keep a count of the number of batteries which pass into the outlet chute 26 and when the failed battery enters the outlet chute 26 a flap 44 will be opened to cause that battery to fall into a reject container 45. Charged batteries are stored within the storage region 25 until the control circuit 17 registers that a battery should be dispensed to the outlet hopper 27 whereupon it will cause a gate member 46 (Figure 3) to operate to allow one battery to fall out into the chute 26. A power supply unit 19 (Figure 1) for the various operating circuits of the machine is housed in the base of the cabinet 1.

As the batteries fall through the battery storage and charge unit 9 there is a possibility of damage occurring to the batteries, particularly for the larger batteries which require a greater space between the abutments 38. To guard against this the side walls 37 and the abutments 38 of the stacks 36 may be lined with an insert 47 (Figure 5). This insert 47 will be moulded or extruded from a suitable impact absorbing material. Linings of a similar material may be incorporated in other areas where batteries might be subjected to impact damage.

It will be appreciated from examining the drawings

MJ/MIO                    -12-

**0156505**

that control of the batteries throughout the machine is by gravity feed. Because of this it is desirable at various stages to control the movement of the battery. For example the flap 20 within the acceptance port 8 (Figures 2 and 3) is so formed that, when it is in its lower position, it will retain a battery 18 which has fallen into the entry of the supply channel 28. The solenoid controlling movement of the flap 20 will be held on for a short period of time (by the control unit 17) so that the battery has time to come to rest and will not be subjected to spin as it starts to roll down the track 30 upon retraction of the flap 20. As previously explained the stepped track 30 itself controls the way in which the battery runs down the sloping floor 29. The angled portions 32 of the side walls 31 also assist in this and additionally act to prevent any projecting battery terminals from touching the side walls which could otherwise cause misalignment. It is envisaged that the outlet chute 26 will additionally incorporate a stepped track of the form illustrated at 30 in Figure 4 so as to ensure that there is a controlled supply of batteries along the outlet chute 26 to the outlet hopper 27.

The drawings essentially illustrate a single module comprising the battery receipt unit of Figure 2 and the battery storage and charging unit of Figure 3.

MJ/MIO

It should be noted that there may be a series of modules side by side, each being designed for batteries of varying types. The module as illustrated is designed for batteries of cylindrical form but with suitable modification a module could operate to receive and dispense batteries of rectangular rather than circular cross-section. These modules will be replaceable so as to change the configuration of a machine to suit particular market conditions. In use each module will be connected in turn to the power supply unit 19 and will go through a suitable sequence of operations if any used batteries have been installed within the relevant entry pocket 4 of the respective modules.

The battery storage unit 9 of Figure 1 could incorporate a microswitch at the lower end of the supply channel 28 which will sense the presence of a battery and initiate an alarm condition indicating that there has been some failure of one or more of the flaps 33. Another possible modification is to incorporate an electrical probe to check the condition of a battery, when the battery reaches the sensing head 7. If this probe determines that the battery is incapable of being recharged then it can either ensure that that battery is passed round to the discard outlet 10 or the control circuit 17 could send control signals which would allow the battery to pass through the acceptance port 8 but then run down the length of the supply channel 28 whereupon the battery will pass through an exit flap opened by the control circuit 17 to fall down into the reject container 45.

0156505

## CLAIMS

1. A battery vending machine having an input for receipt of a used battery characterised by a battery identification unit (7) to check for acceptable batteries when inserted, a charging unit (39, 43) for recharging the battery to a predetermined high charge level, and a battery dispensing unit (25,26) for dispensing another charged battery from the machine upon receipt of an acceptable used battery and upon receipt of an activating signal from a control unit (17), the charging unit output being connected to deliver recharged batteries to the input of the battery dispensing unit.

2. A battery vending machine according to claim 1, further characterised in that the identification unit (7) is effective to check the size or type of battery or for possible physical damage to the battery and to reject any non-standard battery, and may additionally or alternatively be effective to check the age or number of previous recharging operations applied to the battery and to accept any battery falling within predetermined limits for transmission to the charging unit (39) and to transfer any batteries falling outside the limits to a reject store (45).

3. A battery vending machine according to claim 1 or claim 2 further characterised in that the charging

0156505

unit (39,43) incorporates a discharging section for discharging an accepted battery to a predetermined low charge level, before recharging commences and may additionally be designed to subject the battery to a continuous charge for a predetermined period of time or be designed to cause cyclic recharging of the battery with a short discharge period during which the state of the battery will be checked, until a required charging level is reached.

4. A battery vending machine according to any one of claims 1 to 3, further characterised in that the dispensing unit (25,26) is effective to dispense a battery of the type as determined by the identification unit (7) or by an input to the control unit (17).

5. A battery vending machine according to any one of claims 1 to 7, further characterised by a storage compartment (25) for holding batteries between transfer from the charging unit (39) to the dispensing unit (26).

6. A battery vending machine according to any one of claims 1 to 5, wherein the control unit (17) is designed to produce the activating signal upon receipt of a coded input signal or the insertion of suitable coins or tokens into the machine.

7. A battery vending machine according to any one of claims 1 to 6, further characterised by a display unit (2) for indicating acceptance of a battery and requirements for activation of the control unit, and may additionally indicate the reason for rejection of any unacceptable batteries.

8.    A battery vending machine according to any one of claims 1 to 7 constructed to cause batteries to pass therethrough by gravity feed.

9.    A battery vending machine according to claim 8, wherein the charging unit (39) is incorporated as part of a vertically disposed rack (36) through which the batteries will pass, and wherein flanges (38) project alternately from the inner faces (37) of the side walls of the rack (36) so as to define a serpentine path for the batteries.

10.    A battery vending machine according to claim 9, further characterised in that releasable gates (40,41,46) are provided within the rack (36) to hold batteries at desired locations within the rack for required periods of time.

11.    A battery vending machine according to claim 9 or claim 10 including an array of identical racks (36) positioned side by side and means (33) for feeding batteries to the racks in sequence so as to ensure an even supply to the racks.

12.    A battery vending machine according to claim 11, further characterised in that means for feeding batteries to the racks comprises a sloping supply channel (28) incorporating gates (33) which will be raised by control means as required to allow batteries to fall into the racks (36) in sequence, the floor (29) of the sloping supply channel (28) preferably being of undulating form in the direction of travel so as to control the alignment of the batteries as they pass down the supply channel, and the side walls of the supply channel preferably having portions (32) angled away from near the base of the supply channel (28).

13. A battery vending machine according to any one of claims 1 to 12, further characterised in that the input for receipt of a used battery comprises a pocket (4) with a closable door (16).

14. A battery vending machine according to any one of claims 1 to 13 including a rotary member (5) with pockets (11,12,13,14) for receipt of batteries for transferring the batteries from the input (15), past the identification unit (7) and to an inlet (8) to the charging unit or to a discard outlet (10).

Fig.I.

FIG.5.

FIG.2.

FIG.4.

FIG.3.

**0156505**

European Patent
Office

**EUROPEAN SEARCH REPORT**

Application number

EP 85 30 1174

## DOCUMENTS CONSIDERED TO BE RELEVANT

| Category | Citation of document with indication. where appropriate, of relevant passages | Relevant to claim | CLASSIFICATION OF THE APPLICATION (Int Cl 4) |
|---|---|---|---|
| Y | PATENTS ABSTRACTS OF JAPAN, vol. 3, no. 1, 11th January 1979, page 37 E82; & JP - A - 53 127 000 (MATSUSHITA DENKI SANGYO K.K.) 11-06-1978 | 1 | G 07 F 7/06 H 01 M 10/42 |
| A | IDEM. | 4,5 | |
| Y | US-A-3 171 568 (R.ARWINE) * Column 1, lines 8-43; column 3, lines 11-30; claims 1-3; figures * | 1 | |
| A | | 3-5,8-10 | |
| Y | US-A-4 248 334 (C.J.HANLEY et al.) * Column 2, line 22 - column 3, line 65; claim 1; figures * | 1 | TECHNICAL FIELDS SEARCHED (Int. Cl 4) G 07 F H 01 M |
| A | | 2,6,7 | |
| A | US-A-4 248 358 (T.B.MUENCH) * Abstract; figures * | 1,11 | |
| | -/- | | |

The present search report has been drawn up for all claims

| Place of search | Date of completion of the search | Examiner |
|---|---|---|
| THE HAGUE | 30-05-1985 | MEYL D. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03 82

European Patent Office

| Category | Citation of document with indication. where appropriate, of relevant passages | Relevant to claim | CLASSIFICATION OF THE APPLICATION (Int. Cl 4) |
|----------|-------------------------------------------------------------------------------|-------------------|----------------------------------------------|
| A | US-A-4 237 409 (R.K.SUGALSKI) <br><br> * Abstract; column 2, line 26 - column 3, line 31; claims 1-3; figures * | 1,3-5, 8,9 | |
| A | DE-B-1 147 429 (TELEFONBAU UND NORMALZEIT) <br> * Column 3, line 36 - column 4, line 11; figures * | 1,13, 14 | |
| A | GB-A- 916 039 (AUTOMATIC CANTEEN COMP.) <br> * Page 1, lines 19-36; figures * | 1,8,11 | |
| A | US-A-3 675 108 (T.H.NICHOLL) <br> * Column 1, lines 14-60; figures * | 1 | |
| A | US-A-2 260 643 (J.ROSAN) | | TECHNICAL FIELDS SEARCHED (Int. Cl.4) |
| A | DE-A-3 215 627 (P.HETTLER) | | |
| A | US-A-2 804 958 (B.GARRARD) | | |

The present search report has been drawn up for all claims

| Place of search | Date of completion of the search | Examiner |
|-----------------|----------------------------------|----------|
| THE HAGUE | 30-05-1985 | MEYL D. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82